# EUROPEAN PATENT APPLICATION

(11) **EP 2 579 150 A1**
(43) Date of publication of application: **10.04.2013**
(21) Application number: 11789102.8
(22) Date of filing: 20.04.2011
(51) Int. Cl.: G06F 9/44

(54) **DEVELOPMENT METHOD USING UML SEQUENCE DIAGRAM AND ACTIVITY DIAGRAM GENERATION TOOL**

(30) Priority: 03.06.2010 CN 201010198178
(71) Applicant: Huawei Technologies Co., Ltd., Shenzhen, Guangdong 518129 (CN)
(72) Inventor: HE, Qin, Shenzhen Guangdong 518129 (CN); PANG, Qiyong, Shenzhen Guangdong 518129 (CN)
(74) Representative: Lord, Michael
(86) International application number: PCT/CN2011/073040
(87) International publication number: WO 2011/150723

(57) **Abstract**

The present invention provides a method for development by using a unified modeling language UML sequence diagram, and an activity diagram generating tool. The method mainly includes: obtaining a UML sequence diagram corresponding to a service processing procedure, where the UML sequence diagram includes at least one of a branch processing diagram element, a parallel processing diagram element, and an internal processing diagram element; and generating a corresponding activity diagram from the UML sequence diagram. By using the present invention, it may be implemented that different processing logics are executed according to different situations of various services.

## Description

This application claims priority to Chinese Patent Application No. 201010198178.3, filed with the Chinese Patent Office on June 3, 2010 and entitled "METHOD FOR DEVELOPMENT BY USING UML SEQUENCE DIAGRAM AND ACTIVITY DIAGRAM GENERATING TOOL", which is incorporated herein by reference in its entirety.

### FIELD OF THE INVENTION

The present invention relates to the field of communications technologies, and in particular, to a method for development by using a UML sequence diagram and an activity diagram generating tool.

### BACKGROUND OF THE INVENTION

Unified modeling language (UML, Unified Modeling Language) is currently applied to the field of software engineering to some extent, and it is a tool for designing an object-oriented program, and is used to abstract an object-oriented solution from a problem in reality, so as to facilitate further coding.

The UML is formed by a pile of diagrams including: a use case diagram, a class diagram, an object diagram, a state generating diagram, an activity diagram, a sequence diagram, a deployment diagram, and so on. Meaning of existence of these diagrams is: on the one hand, to enable personnel who analyze and design software to have more profound understanding and awareness of a target problem (which is achieved in a process of drawing these diagrams); and on the other hand, to enable all personnel involved in a project to participate in design of the project. The UML provides a straightforward, simple, and common method for understanding a function and a structure of software by non-professional programming personnel.

However, in a process of invention, the inventor finds that: A conventional UML sequence diagram can only represent a trunk procedure of service operation, and when a service procedure changes, the UML sequence diagram cannot be used for expression, for example, it is difficult to accurately express a conditional branch, parallel event processing, and so on.

### SUMMARY OF THE INVENTION

Embodiments of the present invention provide a method for development by using a UML sequence diagram and an activity diagram generating tool, so as to implement that multiple logical processing processes can be expressed in the UML sequence diagram.

A method for development by using a unified modeling language UML sequence diagram includes:
obtaining a UML sequence diagram corresponding to a service processing procedure, where the UML sequence diagram includes at least one of a branch processing diagram element, a parallel processing diagram element, and an internal processing diagram element; and
generating a corresponding activity diagram from the UML sequence diagram.

An activity diagram generating tool includes:
an obtaining unit, configured to obtain a UML sequence diagram corresponding to a service processing procedure, where the UML sequence diagram includes representation of at least one of a branch processing diagram element, a parallel processing diagram element, and an internal processing diagram element; and
a generating unit, configured to generate a corresponding activity diagram from the UML sequence diagram.

It can be seen from the technical solutions provided in the foregoing embodiments of the present invention that, in the embodiments of the present invention, the UML sequence diagram includes the representation of at least one of the branch processing diagram element, the parallel processing diagram element, and the internal processing diagram element, and the sequence diagram is converted into the activity diagram, so that different processing logics are executed according to different situations of various service procedures.

### BRIEF DESCRIPTION OF THE DRAWINGS

To illustrate the technical solutions according to the embodiments of the present invention more clearly, accompanying drawings to be used for describing the embodiments are introduced briefly below. Apparently, the accompanying drawings in the following description are merely some embodiments of the present invention, and persons of ordinary skill in the art may further obtain other drawings according to these accompanying drawings without making creative efforts.
FIG. 1 is a flow chart of a method for development by using a UML sequence diagram according to a first embodiment of the present invention;
FIG. 2 is a UML sequence diagram with a branch processing logic according to a second embodiment of the present invention;
FIG. 3 is an activity diagram generated from the UML sequence diagram shown in FIG. 2 according to the second embodiment of the present invention;
FIG. 4 is a UML sequence diagram with a parallel processing logic according to a third embodiment of the present invention;
FIG. 5 is an activity diagram generated from the UML sequence diagram shown in FIG. 4 according to the third embodiment of the present invention;
FIG. 6 is a UML sequence diagram with an internal processing logic according to a fourth embodiment of the present invention;
FIG. 7 is an activity diagram generated from the UML sequence diagram shown in FIG. 6 according to the fourth embodiment of the present invention;
FIG. 8 is a UML sequence diagram with nesting according to a fifth embodiment of the present invention;
FIG. 9 is a schematic structural diagram of an activity diagram generating tool according to an embodiment of the present invention; and
FIG. 10 is a schematic structural diagram of another activity diagram generating tool according to an embodiment of the present invention.

### DETAILED DESCRIPTION OF THE EMBODIMENTS

To facilitate understanding of embodiments of the present invention, further explanation and illustration are given in the following with reference to the accompanying drawings and by taking several specific embodiments as examples, and each of the embodiments shall not be construed as a limitation on the present invention.

### Embodiment 1

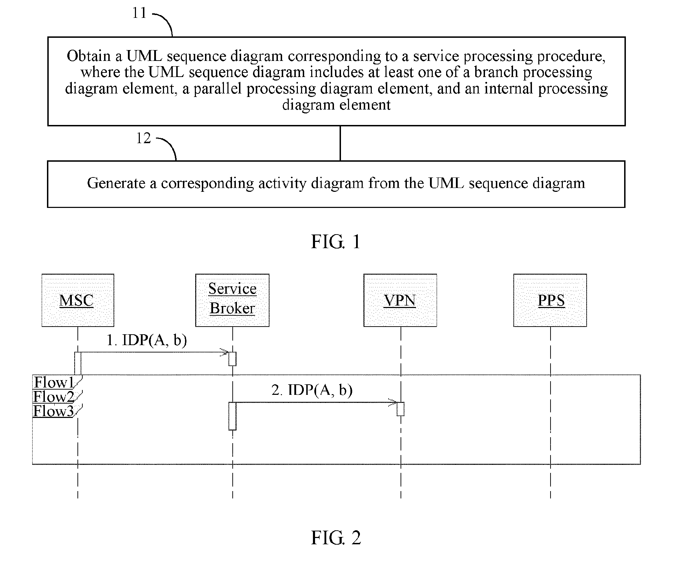

The embodiment provides a method for development by using a UML sequence diagram, which, as shown in FIG. 1, includes the following processing steps.

Step 11: Obtain a UML sequence diagram corresponding to a service processing procedure, where the UML sequence diagram includes at least one of a branch processing diagram element, a parallel processing diagram element, and an internal processing diagram element.

Step 12: Generate a corresponding activity diagram from the UML sequence diagram.

It can be seen from the foregoing technical solution provided in the embodiment of the present invention that, in the embodiment of the present invention, a UML sequence diagram includes representation of at least one of a branch processing diagram element, a parallel processing diagram element, and an internal processing diagram element, and the sequence diagram is converted into the activity diagram, so that different processing logics are executed according to different situations of various service procedures.

A specific process of generating the branch processing diagram element, the parallel processing diagram element, or the internal processing is introduced in detail below.

### Embodiment 2

A service processing procedure with a branch processing logic exists in this embodiment. When a UML sequence diagram is used to represent the service processing procedure with the branch processing logic, multiple branch diagram elements need to be set in the UML sequence diagram to represent processing logics of multiple different branches, such as Flow1 and Flow2, where the branch diagram element Flow1 corresponds to a first branch processing logic, and the branch diagram element Flow2 corresponds to a second branch processing logic. Therefore, when the Flow1 or Flow2 is selected, specific processing steps of a corresponding branch processing logic are demonstrated. It should be noted that, in a representation method of the branch diagram element, for example, in FIG. 2, two parallel small block icons are used to represent three parallel branches; definitely, other shapes may also be set, for example, a circle is set, to represent a branch diagram element; and different colors may also be set, for example, a red figure represents a branch diagram element. The embodiment of the present invention does not limit a representation manner of the branch diagram element as long as a diagram element can be uniquely distinguished as a branch diagram element.

A working principle of the UML sequence diagram with the branch diagram element is illustrated in the following with reference to a specific embodiment. The UML sequence diagram of the service processing procedure is as shown in FIG. 2.

A core network MSC triggers a call service, and the MSC sends, according to user subscription information of calling and called users of the call service, a Service Broker an IDP(A, b) message carrying parameter information of the call service.

After receiving the IDP(A, b) message, the Service Broker obtains the carried parameter information of the call service. According to service identification information in the parameter information, there are three types of the service identification information, and subsequent procedures are different for different service identification information. That is, there is a branch processing procedure. Therefore, when the UML sequence diagram is preset, a branch diagram element needs to be set to represent this logic, and as depicted in FIG. 2, branch diagram elements are a diagram element Flow1, a diagram element Flow2, and a diagram element Flow3.

According to the service identification information in the parameter information, the Service Broker determines whether a processing logic corresponding to the branch diagram element Flow1 or a processing logic corresponding to the branch diagram element Flow2 is to be executed. For example, when it is determined, according to the service identification information in the parameter information, that the processing logic of the branch diagram element Flow1 is to be executed, the branch diagram element Flow1 (step 2 in FIG. 2 is a branch corresponding to the Flow1) is selected, a specific processing step of the processing logic is obtained, and the specific processing step is executed.

The processing step of the branch diagram element Flow1 may include: sending, by the Service Broker, the IDP(A, b) message to a VPN system.

FIG. 2 only displays a procedure corresponding to the branch diagram element Flow1. However, due to the limitation of page display, a specific branch procedure corresponding to the branch diagram element Flow2 is not displayed. In actual application, according to the service identification information in the parameter information, the Service Broker determines that the branch diagram element Flow2 is to be executed, and in this case, only the branch diagram element Flow2 needs to be selected, and FIG. 2 will display a procedure corresponding to the Flow2 procedure, for example, the Service Broker sends the IDP(A, b) message to a PPS. If the Service Broker determines, according to the service identification information in the parameter information, that the branch diagram element Flow3 is to be executed, the branch diagram element Flow3 is selected accordingly (it is assumed that the procedure is a procedure of internal processing of the Service Broker), and a procedure corresponding to the Flow3 is executed.

Further, in actual application, processing of multiple branches may exist. In this case, multiple branch diagram elements are added correspondingly, and each branch diagram element represents a specific processing procedure.

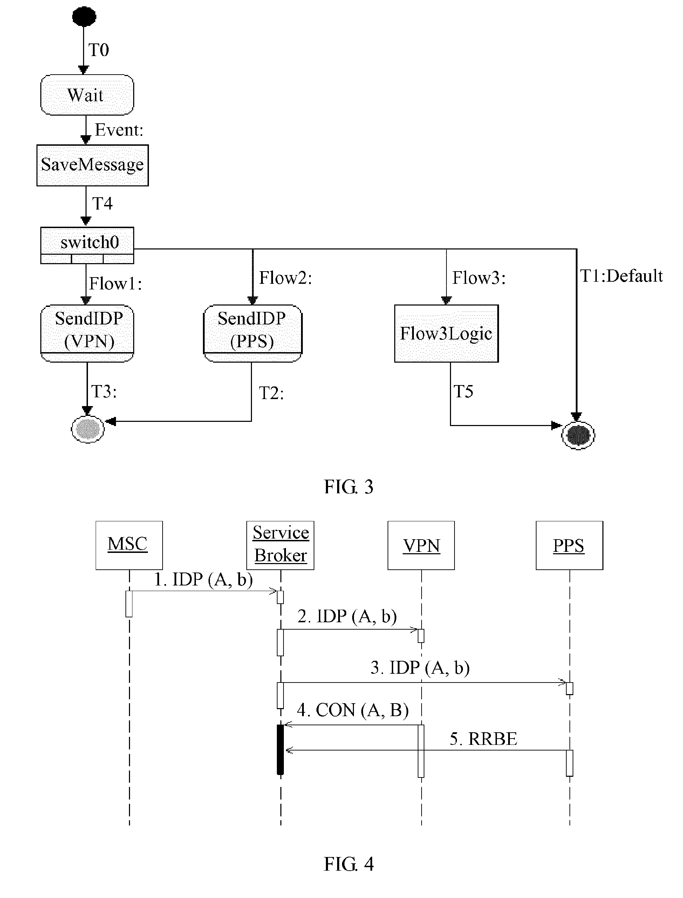

In the embodiment of the present invention, various configured diagram elements of an activity diagram may be used for generating an activity diagram from the sequence diagram shown in FIG. 2. During a process of generating the activity diagram from the sequence diagram, the generating is performed from the perspective of a network element, for example, FIG. 3 is an activity diagram generated from the sequence diagram in FIG. 2 from the perspective of the Service Broker. A process of the generating is introduced in the following.

The Service Broker receives an IDP message and stores the IDP message, performs logical judgment, and selects a processing branch corresponding to the IDP message.

Once the Service Broker receives the IDP message, a Wait (waiting processing) diagram element and a SaveMessage (storage) diagram element are generated from the activity diagram, which is the same as that in the prior art and is not described in detail here.

Diagram elements of the activity diagram may be directly converted into corresponding program codes, and this process is the same as that in the prior art and is not described in detail here.

When the Service Broker analyzes the IDP message, there are three different processing procedures according to different parameter information included in the IDP message. That is to say, a branch processing logic exists. In this case, the branch diagram element of the sequence diagram is converted into a branch processing Switch0 diagram element of the activity diagram. The branch processing Switch0 diagram element of the activity diagram includes four branches, which are a branch 1 for generating a code of sending, by the Service Broker, the IDP message to the VPN, a branch 2 for generating a code of sending, by the Service Broker, the IDP message to the PPS, a branch 3 for generating a code of performing, by the Service Broker, internal processing on the IDP message, and a branch 4 for generating a default default branch code and execution directly goes to a failure processing exit.

### Embodiment 3

In a processing process in this embodiment, a certain network element needs to process multiple events at the same time. That is to say, a parallel processing logic exists in the processing process. Therefore, when a UML sequence diagram represents a procedure, a parallel processing diagram element needs to be set. For example, as shown in FIG. 4, the parallel processing diagram element may be represented by a black vertical small block. The parallel processing diagram element takes effect only after a CON message returned by a VPN in step 4 and an RRBE message returned by a PPS in step 5 are received, that is, a Service Broker simultaneously processes the CON message and the RRBE message. If only one of the CON message and the RRBE message is received, the parallel processing diagram element does not take effect, that is, the Service Broker does not process the CON message or the RRBE message, and a processing procedure of an entire call service fails. It should be noted that, a representation method of the parallel processing diagram element may be the black vertical small block in FIG. 4; definitely, other shapes may also be set, for example, a circle is set to represent a parallel processing diagram element; and different colors may also be set, for example, a red figure represents a parallel processing diagram element. The embodiment of the present invention does not limit a representation manner of the parallel processing diagram element as long as a diagram element can be uniquely distinguished as a parallel processing diagram element.

A specific processing process of the service processing procedure is as follows.

A core network MSC triggers the call service, and the MSC sends, according to user subscription information of calling and called users of the call service, the Service Broker an IDP(A, b) message carrying parameter information of the call service.

After receiving the IDP(A, b) message, the Service Broker obtains the carried parameter information of the call service, obtains, according to service identification information in the parameter information, a saved sequence diagram corresponding to the service processing procedure of the call service, and executes the service processing procedure.

The Service Broker sends the IDP(A, b) message to the VPN and the PPS. After receiving the IDP(A, b) message, the VPN triggers a VPN service, and a short number b is converted into a long number B in the VPN service. The VPN sends a CON(A, B) message to the Service Broker. After receiving the IDP(A, b) message, the PPS triggers a PPS service, and the PPS sends an RRBE message to the Service Broker.

After the Service Broker receives the CON message returned by the VPN and the RRBE message returned by the PPS, the parallel processing diagram element in the sequence diagram takes effect, and the Service Broker simultaneously processes the CON message and the RRBE message and continues to execute subsequent processing steps.

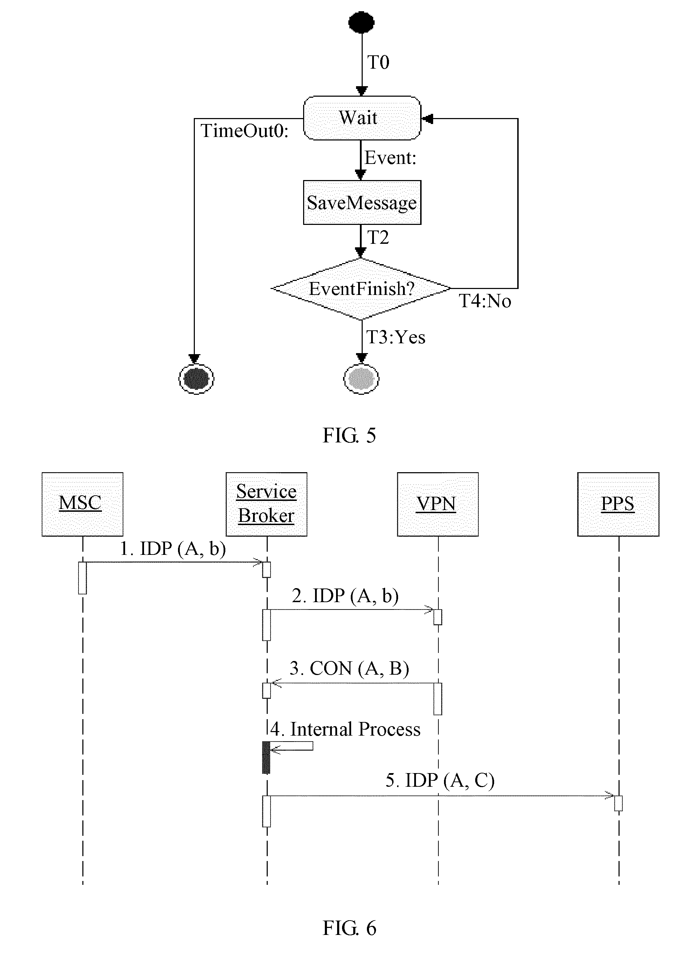

In the embodiment of the present invention, various configured diagram elements of an activity diagram may be used for generating an activity diagram from the sequence diagram shown in FIG. 4. During a process of generating the activity diagram from the sequence diagram, the generating is performed from the perspective of a network element, for example, FIG. 5 is an activity diagram generated from the sequence diagram in FIG. 4 from the perspective of the Service Broker. Only a process of generating the activity diagram in step 4 and step 5 in FIG. 4 are introduced in the following.

An activity diagram generating tool generates, according to the parallel processing diagram element existing in the sequence diagram, a parallel processing diagram of a corresponding activity diagram from the parallel processing diagram element of the sequence diagram, as shown in FIG. 5.

The activity diagram generating tool generates, from the parallel processing diagram element of the sequence diagram, a parallel processing activity diagram including a Wait (waiting processing) diagram element, a SaveMessage (storage) diagram element, and an EventFinish (parallel judgment) diagram element. The Wait (waiting processing) diagram element is used to: after a predetermined execution period of a service logic ends (TimeOut), connect to an execution failure exit; and before the execution period ends, process a CON event reported by the VPN and an RRBE event reported by the PPS, and separately send processing information of the CON event and the RRBE event to the SaveMessage diagram element. The SaveMessage diagram element is used to save the processing information of the CON event and the RREB event, and connect to an execution success exit. The EventFinish (parallel judgment) diagram element is used to judge whether execution of both the CON event and the RRBE event are completed, and if yes, connect to the execution success exit, and otherwise, connect to the waiting processing diagram element to continue waiting for the CON event reported by the VPN or the RRBE event reported by the PPS. Because a parallel processing process exists, a cyclic parallel judgment process exists in the activity diagram, which ensures that a cyclic waiting process is ended only after processing of all parallel events is ended.

### Embodiment 4

In a processing process in this embodiment, a certain network element needs to perform internal processing in a certain step. That is to say, an internal processing logic exists in the processing process. Therefore, when a UML sequence diagram represents a procedure, an internal processing diagram element needs to be set. For example, as shown in FIG. 6, the internal processing diagram element may be represented by a cyclic arrow, and if the internal processing diagram element is double-clicked, an editor may be opened, and a complete sub-activity diagram may be edited in the editor.

For example, a specific processing process of a service processing procedure is as follows.

A core network MSC triggers a call service, and the MSC sends, according to user subscription information of calling and called users of the call service, a Service Broker an IDP(A, b) message carrying parameter information of the call service.

After receiving the IDP(A, b) message, the Service Broker obtains the carried parameter information of the call service, obtains, according to service identification information in the parameter information, a stored sequence diagram corresponding to the service processing procedure of the call service, and executes the service processing procedure.

The Service Broker sends the IDP(A, b) message to a VPN. After receiving the IDP(A, b) message, the VPN triggers a VPN service, and a long number B is generated from a short number b in the VPN service. The VPN sends a CON(A, B) message to the Service Broker.

After the Service Broker receives the CON(A, B) message, the internal processing diagram element takes effect, and the Service Broker executes the internal processing logic, and converts the long number B in the IDP(A, b) message into a long number C. Then, the Service Broker sends a DP(A, C) message to a PPS, and continues to execute subsequent processing steps.

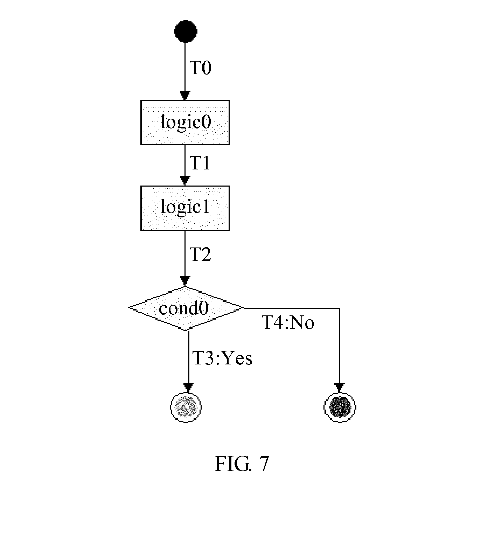

In the embodiment of the present invention, various configured diagram elements of an activity diagram may be used for converting the internal processing diagram element in the sequence diagram shown in FIG. 6 into a diagram element of an internal processing activity diagram shown in FIG. 7. Only a process of generating a corresponding activity diagram from the internal processing process of step 4 in FIG. 6, where the Service Broker replaces the long number B in the IDP(A, b) message with the long number C, is introduced here.

An activity diagram generating tool generates, according to the internal processing diagram element existing in the sequence diagram, an internal processing diagram of the corresponding activity diagram from the internal processing diagram element of the sequence diagram, as shown in FIG. 7. The activity diagram generating tool generates an activity diagram including multiple Logic (internal processing logic) diagram elements and a cond (conditional judgment) diagram element from the internal processing diagram element of the sequence diagram, where the number of the Logic (internal processing logic) diagram elements of the generated activity diagram is equal to the number of processing logics of the internal processing diagram element of the sequence diagram. For example, FIG. 7 includes two Logic (internal processing logic) diagram elements, which are an internal processing process of querying the long number C corresponding to the long number B, and an internal processing process of changing the long number B into the long number C.

### Embodiment 5

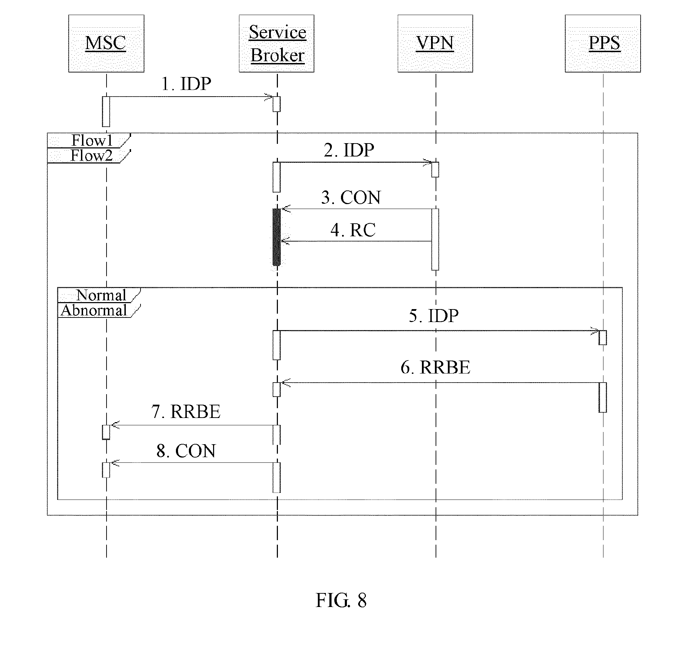

The foregoing various processing logical relationships may also be nested for use. For example, service procedures of branch processing and nested sub-branch processing exist in a Service Broker in this embodiment. As shown in FIG. 8, branch processing diagram elements Flow1 and Flow2 represent two different branch processing processes, where an exception processing logic further exists in a Flow1 branch processing logic.

A core network MSC triggers a call service, and the MSC sends, according to user subscription information of calling and called users of the call service, the Service Broker an IDP message carrying parameter information of the call service. The Service Broker obtains the carried parameter information of the call service, and according to service identification information in the parameter information, executes a procedure of the Flow1, that is, content demonstrated in FIG. 8 (FIG. 8 does not display a branch procedure of the Flow2). The Service Broker sends the IDP message to a VPN. In a case of successful processing, the VPN sends a CON message to the Service Broker, and in a case of failed or abnormal processing, the VPN sends an RC message to the Service Broker (it should be noted that, this is not a parallel processing process, but is an optional process). Because the Service Broker may receive different types of messages, one nested sub-branch processing diagram element exists in the branch processing diagram element of the Flow1, that is, a branch processing diagram element normal and a branch processing diagram element abnormal exist. If the Service Broker receives the CON message, a normal branch processing logic is executed, and if the Service Broker receives the RC message, an abnormal branch processing logic is executed, where the content demonstrated in FIG. 8 is the normal branch processing logic, and the abnormal branch processing logic is not displayed in FIG. 8.

Because the Service Broker receives the CON message from the VPN, a normal branch processing process is executed, that is, the Service Broker sends the IDP message to a PPS, receives an RRBE message returned by the PPS, and further sends the RRBE and CON messages to the MSC.

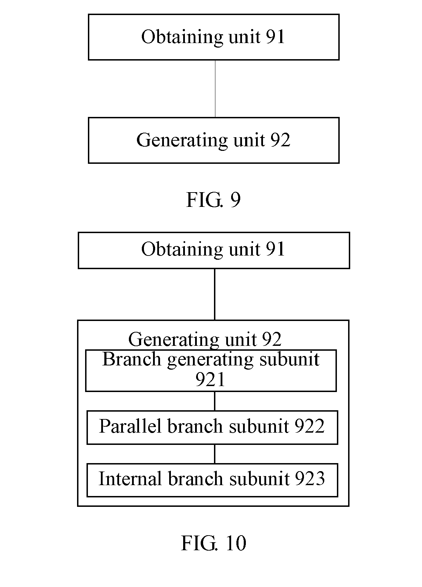

An embodiment of the present invention further provides an activity diagram generating tool, having a specific implementation structure shown in FIG. 9, and including:
an obtaining unit 91, configured to obtain a UML sequence diagram corresponding to a service processing procedure, where the UML sequence diagram includes at least one of a branch processing diagram element, a parallel processing diagram element, and an internal processing diagram element; and
a generating unit 92, configured to generate a corresponding activity diagram from the UML sequence diagram.

Further, as shown in FIG. 10, the generating unit 92 specifically includes a branch generating subunit 921, a parallel generating subunit 922, and an internal generating subunit 923, where:
the branch generating subunit 921 is configured to convert a branch processing diagram element of the UML sequence diagram into a branch processing Switch0 diagram element of the activity diagram, where the number of processing branches included in the branch processing Switch0 diagram element of the activity diagram is equal to the number of branches of the branch processing diagram element of the UML sequence diagram;
the parallel generating subunit 922 is configured to convert the parallel processing diagram element of the UML sequence diagram into a waiting processing diagram element, a storage diagram element, and a parallel judgment diagram element that are of the activity diagram; and
the internal generating subunit 923 is configured to convert the internal processing diagram element of the UML sequence diagram into one or more than one internal processing logic diagram element and a conditional judgment diagram element that are of the activity diagram.

Persons of ordinary skill in the art can understand that all or part of the procedures in the methods in the foregoing embodiments may be implemented by a computer program instructing relevant hardware. The program may be stored in a computer readable storage medium. When the program is run, the procedures of the foregoing method embodiments may be executed. The storage medium may be a magnetic disk, an optical disk, a read-only memory (Read-Only Memory, ROM) or a random access memory (Random Access Memory, RAM), and so on.

It can be seen from the technical solutions provided in the embodiments of the present invention that, in the embodiments of the present invention, the UML sequence diagram includes representation of at least one of the branch processing diagram element, the parallel processing diagram element, and the internal processing diagram element, and the sequence diagram is converted into the activity diagram, so that different processing logics are executed according to different situations of various service procedures.

In the embodiments of the present invention, a problem that semantic meanings of a sequence diagram are imprecise and cannot be used to accurately express a process of executing a service logic is solved. The sequence diagram and the activity diagram in the embodiments of the present invention are used for development of services, which makes service logics clearer, improves efficiency of service development, and meanwhile, reduces maintenance difficulty.

The foregoing descriptions are merely specific exemplary embodiments of the present invention, but are not intended to limit the protection scope of the present invention. Any modification or replacement that can be easily made by persons skilled in the art within the technical scope disclosed in the present invention shall fall within the protection scope of the present invention. Therefore, the protection scope of the present invention is subject to the protection scope of the claims.

## Claims

1. A method for development by using a unified modeling language UML sequence diagram, comprising:
obtaining a UML sequence diagram corresponding to a service processing procedure, wherein the UML sequence diagram comprises at least one of a branch processing diagram element, a parallel processing diagram element, and an internal processing diagram element; and
generating a corresponding activity diagram from the UML sequence diagram.

2. The method according to claim 1, wherein when the UML sequence diagram is the branch processing diagram element, the branch processing diagram element represents more than one different branch processing logic; and
the generating the corresponding activity diagram from the UML sequence diagram specifically is:
converting the branch processing diagram element of the UML sequence diagram into a branch processing Switch0 diagram element of the activity diagram, wherein the number of processing branches comprised in the branch processing Switch0 diagram element of the activity diagram is equal to the number of branches of the branch processing diagram element of the UML sequence diagram.

3. The method according to claim 1, wherein when the UML sequence diagram is the parallel processing diagram element, the parallel processing diagram element represents a parallel processing logic; and
the generating the corresponding activity diagram from the UML sequence diagram specifically is: converting the parallel processing diagram element of the UML sequence diagram into a waiting processing diagram element, a storage diagram element, and a parallel judgment diagram element that are of the activity diagram.

4. The method according to claim 3, further comprising: after the parallel judgment diagram element determines, according to information received by the waiting processing diagram element and the storage diagram element, that parallel processing is successful, ending a parallel processing procedure.

5. The method according to claim 1, wherein when the UML sequence diagram is the internal processing diagram element, the internal processing diagram element represents an internal processing logic; and
the generating the corresponding activity diagram from the UML sequence diagram specifically is: converting the internal processing diagram element of the UML sequence diagram into one or more than one internal processing logic diagram element and a conditional judgment diagram element that are of the activity diagram.

6. The method according to claim 5, further comprising: after the conditional judgment diagram element determines, according to information received by the one or more than one internal processing logic diagram element, that internal processing is successful, ending a parallel processing procedure.

7. The method according to claim 1, further comprising: nesting processing diagram elements of the UML sequence diagram in one another for use.

8. The method according to claim 1, further comprising: presetting, in the UML sequence diagram and according to a service processing logic, at least one of the branch processing diagram element, the parallel processing diagram element, and the internal processing diagram element.

9. An activity diagram generating tool, comprising:
an obtaining unit, configured to obtain a UML sequence diagram corresponding to a service processing procedure, wherein the UML sequence diagram comprises at least one of a branch processing diagram element, a parallel processing diagram element, and an internal processing diagram element; and
a generating unit, configured to generate a corresponding activity diagram from the UML sequence diagram.

10. The activity diagram generating tool according to claim 9, wherein the generating unit comprises a branch generating subunit, a parallel generating subunit, and an internal generating subunit, wherein:
the branch generating subunit is configured to convert the branch processing diagram element of the UML sequence diagram into a branch processing Switch0 diagram element of the activity diagram, wherein the number of processing branches comprised in the branch processing Switch0 diagram element of the activity diagram is equal to the number of branches of the branch processing diagram element of the UML sequence diagram;
the parallel generating subunit is configured to convert the parallel processing diagram element of the UML sequence diagram into a waiting processing diagram element, a storage diagram element, and a parallel judgment diagram element that are of the activity diagram; and
the internal generating subunit is configured to convert the internal processing diagram element of the UML sequence diagram into one or more than one internal processing logic diagram element and a conditional judgment diagram element that are of the activity diagram.
